(19) **Europäisches Patentamt**
**European Patent Office**
**Office européen des brevets**

(11) **EP 2 579 200 A1**

(12) **EUROPEAN PATENT APPLICATION**
published in accordance with Art. 153(4) EPC

(43) Date of publication:
**10.04.2013 Bulletin 2013/15**

(51) Int Cl.:
***G06Q 30/00*** *(2012.01)*

(21) Application number: **11786540.2**

(22) Date of filing: **18.05.2011**

(86) International application number:
**PCT/JP2011/061448**

(87) International publication number:
**WO 2011/148841 (01.12.2011 Gazette 2011/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2010 JP 2010123008**

(71) Applicant: **Rakuten, Inc.**
**Tokyo 140-0002 (JP)**

(72) Inventor: **TAKAMI Shinya**
**Tokyo 140-0002 (JP)**

(74) Representative: **HOFFMANN EITLE**
**Patent- und Rechtsanwälte**
**Arabellastrasse 4**
**81925 München (DE)**

(54) **ADVERTISING MANAGEMENT SYSTEM**

(57) An advertising management system (1) according to one aspect includes a decision unit (12) that decides a display pattern of an advertising content transmitted to a user terminal (10) among a plurality of predetermined display patterns based on at least one of a downloaded amount of the advertising content and a displayed region amount of the advertising content on a screen of the user terminal (10), and a counting unit (25) that executes update processing that counts number of times displayed corresponding to the decided display pattern of the advertising content on a count storage unit (23) that stores number of times each advertising content is displayed with respect to each of the plurality of predetermined display patterns.

**Fig.3**

EP 2 579 200 A1

## Description

## Technical Field

One aspect of the present invention relates to an advertising management system, an advertising management server, an advertising management method, an advertising management program, a decision program, and a computer-readable recording medium.

## Background Art

A framework for acquiring page views indicating the number of times a specific web page is loaded onto a terminal has been known. Various evaluations can be performed using page views. For example, the effectiveness of banner advertising displayed in a banner advertising system as disclosed in Patent Literature 1 below can be evaluated by page views.

## Citation List

## Patent Literature

PTL1: Japanese Unexamined Patent Application Publication No. 2002-149546

## Summary of Invention

## Technical Problem

However, page views are counted uniformly when a user accesses a web page, regardless of whether the user actually views the advertising content in the page. It is thus sometimes inconvenient to use page views as an indicator of the actual display status of an advertisement.

It is therefore demanded to acquire the actual display status of an advertisement in a terminal in detail.

## Solution to Problem

An advertising management system according to one aspect of the present invention is an advertising management system including a terminal and an advertising management server connected to the terminal through a communication network, which includes a decision means for deciding a display pattern of an advertising content transmitted to the terminal among a plurality of predetermined display patterns based on at least one of a downloaded amount of the advertising content and a displayed region amount of the advertising content on a screen of the terminal, and a counting means for executing update processing that counts number of times displayed corresponding to the display pattern of the advertising content decided by the decision means on a storage means storing number of times each advertising content is displayed with respect to each of the plurality of predetermined display patterns.

An advertising management method according to one aspect of the present invention is an advertising management method executed by an advertising management system including a terminal and an advertising management server connected to the terminal through a communication network, which includes a decision step of deciding a display pattern of an advertising content transmitted to the terminal among a plurality of predetermined display patterns based on at least one of a downloaded amount of the advertising content and a displayed region amount of the advertising content on a screen of the terminal, and a counting step of executing update processing that counts number of times displayed corresponding to the display pattern of the advertising content decided in the decision step on a storage means storing number of times each advertising content is displayed with respect to each of the plurality of predetermined display patterns.

According to the above aspects, the display pattern of the advertising content is decided based on at least one of the downloaded amount and the displayed region amount. Then, the number of times displayed in the storage means corresponding to the decision result is updated. By counting the number of times the advertising content is displayed for each of the display patterns, it is possible to acquire the actual display status of the advertisement in the terminal in further detail.

Further, in the advertising management system according to another aspect, the displayed region amount may be a displayed region amount of a specific region being a part of the advertising content. By paying attention to the displayed region amount of the specific region, it is possible to acquire the actual display status of an important part of the advertising content in detail.

Further, in the advertising management system according to another aspect, the screen may be a predetermined window, the advertising content may be embedded in a web page displayed in the window, and the decision means may monitor a change of the displayed region amount during a time when the web page is displayed in the window and decide the display pattern of the advertising content using a statistic of the displayed region amount obtained from a monitoring result during the time. By taking a change of the displayed region amount over time during the period when the web page is displayed into account and deciding the display pattern using a statistic of the displayed region amount, it is possible to acquire the actual display status of the advertisement in further detail.

Further, in the advertising management system according to another aspect, the decision means may decide the display pattern of the advertising content based on an index calculated from the displayed region amount and the downloaded amount. By deciding the display pattern of the advertising content based on both of the displayed region amount and the downloaded amount, it is possible to acquire the actual display status of the advertisement in further detail.

Further, in the advertising management system according to another aspect, the screen may be a predetermined window, the advertising content may be embedded in a web page displayed in the window and may be displayed in the window at all times even when scrolling on the window occurs, and the decision means may acquire the downloaded amount of the advertising content at a point of time when the web page is scrolled to a bottom. By acquiring the downloaded amount of the special advertising content that is displayed at all times within the window by the method with its display pattern taken into account, it is possible to acquire the actual display status of the advertisement in further detail.

Further, in the advertising management system according to another aspect, the terminal may include the decision means. By deciding the display pattern of the advertising content in the terminal, it is possible to reduce the processing load imposed on the advertising management server. Further, because it is only necessary to transmit the decision result from the terminal to the advertising management server, it is possible to reduce the load imposed on the communication network.

Further, in the advertising management system according to another aspect, the advertising management server may include the decision means. By deciding the display pattern of the advertising content in the advertising management server, it is possible to reduce the processing load imposed on the terminal.

Further, the advertising management system according to another aspect may further include an evaluation means for calculating an evaluated value of the advertising content based on the number of times the advertising content is displayed with respect to each of the plurality of predetermined display patterns stored in the storage means. With use of the number of times for each of the display patterns stored as described above, it is possible to evaluate the advertising content in detail.

An advertising management server according to one aspect of the present invention is an advertising management server connected to a terminal through a communication network, which includes a receiving means for receiving decision information indicating a display pattern of an advertising content in the terminal from the terminal, the display pattern of the advertising content decided in the terminal among a plurality of predetermined display patterns based on at least one of a downloaded amount of the advertising content and a displayed region amount of the advertising content on a screen of the terminal, and a counting means for executing update processing that counts number of times displayed corresponding to the display pattern of the advertising content indicated by the decision information received by the receiving means on a storage means storing number of times each advertising content is displayed with respect to each of the plurality of predetermined display patterns.

An advertising management program according to one aspect of the present invention is an advertising management program causing a computer to function as an advertising management server connected to a terminal through a communication network, the program causing the computer to execute a receiving means for receiving decision information indicating a display pattern of an advertising content in the terminal from the terminal, the display pattern of the advertising content decided in the terminal among a plurality of predetermined display patterns based on at least one of a downloaded amount of the advertising content and a displayed region amount of the advertising content on a screen of the terminal, and a counting means for executing update processing that counts number of times displayed corresponding to the display pattern of the advertising content indicated by the decision information received by the receiving means on a storage means storing number of times each advertising content is displayed with respect to each of the plurality of predetermined display patterns.

A decision program according to one aspect of the present invention is a decision program causing a computer to function as a terminal connected to an advertising management server through a communication network, the program causing the computer to execute a decision means for deciding a display pattern of an advertising content transmitted to the computer among a plurality of predetermined display patterns based on at least one of a downloaded amount of the advertising content and a displayed region amount of the advertising content on a screen of the computer, and a transmitting means for transmitting decision information indicating the display pattern of the advertising content decided by the decision means to the advertising management server, the advertising management server executing update processing that counts number of times displayed corresponding to the display pattern of the advertising content indicated by the decision information on a storage means storing number of times each advertising content is displayed with respect to each of the plurality of predetermined display patterns.

A computer-readable recording medium according to one aspect of the present invention is a computer-readable recording medium in which an advertising management program causing a computer to function as an advertising management server connected to a terminal through a communication network is recorded, the advertising management program causing the computer to execute a receiving means for receiving decision information indicating a display pattern of an advertising content in the terminal from the terminal, the display pattern of the advertising content decided in the terminal among a plurality of predetermined display patterns based on at least one of a downloaded amount of the advertising content and a displayed region amount of the advertising content on a screen of the terminal, and a counting means for executing update processing that counts number of times displayed corresponding to the display pattern of the advertising content indicated by the decision information received by the receiving means on a storage means storing number of times each advertising content is displayed with respect to each of the plurality of predetermined display patterns.

A computer-readable recording medium according to one aspect of the present invention is a computer-readable recording medium in which a decision program causing a computer to function as a terminal connected to an advertising management server through a communication network is recorded, the decision program causing the computer to execute a decision means for deciding a display pattern of an advertising content transmitted to the computer among a plurality of predetermined display patterns based on at least one of a downloaded amount of the advertising content and a displayed region amount of the advertising content on a screen of the computer, and a transmitting means for transmitting decision information indicating the display pattern of the advertising content decided by the decision means to the advertising management server, the advertising management server executing update processing that counts number of times displayed corresponding to the display pattern of the advertising content indicated by the decision information on a storage means storing number of times each advertising content is displayed with respect to each of the plurality of predetermined display patterns.

According to the above aspects, the display pattern of the advertising content is decided based on at least one of the downloaded amount and the displayed region amount. Then, the number of times displayed in the storage means corresponding to the decision result is updated. By counting the number of times the advertising content is displayed for each of the display patterns, it is possible to acquire the actual display status of the advertisement in the terminal in further detail. Further, by deciding the display pattern of the advertising content in the terminal, it is possible to reduce the processing load imposed on the advertising management server. Furthermore, because it is only necessary to transmit the decision result from the terminal to the advertising management server, it is possible to reduce the load imposed on the communication network.

**Advantageous Effects of Invention**

According to one aspect of the present invention, it is possible to acquire the actual display status of an advertisement in a terminal in detail.

**Brief Description of Drawings**

Fig. 1 is a diagram showing an overall configuration of an advertising management system according to a first embodiment.
Fig. 2 is a diagram showing a hardware configuration of a user terminal and an EC server shown in Fig. 1.

Fig. 3 is a block diagram showing a functional configuration of the advertising management system shown in Fig. 1.
Figs. 4(a) to 4(d) are diagrams showing display examples of an advertising content.
Figs. 5(a) to 5(f) are diagrams showing display examples of a special region of an advertising content.
Fig. 6 is a diagram showing an example of a web page containing advertising contents.
Figs. 7(a) and 7(b) are diagrams showing configuration examples of a count storage unit.
Fig. 8 is a sequence chart showing an operation of the advertising management system shown in Fig. 1.
Fig. 9 is a diagram showing a configuration of a decision program according to the first embodiment.
Fig. 10 is a diagram showing a configuration of an advertising management program according to the first embodiment.
Fig. 11 is a block diagram showing a functional configuration of an advertising management system according to a second embodiment.
Fig. 12 is a sequence chart showing an operation of the advertising management system shown in Fig. 11.
Fig. 13 is a diagram showing a configuration of a monitoring program according to the second embodiment.
Fig. 14 is a diagram showing a configuration of an advertising management program according to the second embodiment. Description of Embodiments

Embodiments of the present invention will be described in detail with reference the appended drawings. In the embodiments described below, an advertising management server according to one aspect of the present invention is applied to an electronic commerce server (EC server). It is noted that, in the description of the drawings, the same or similar elements will be denoted by the same reference symbols, and redundant description thereof will be omitted.

(First embodiment)

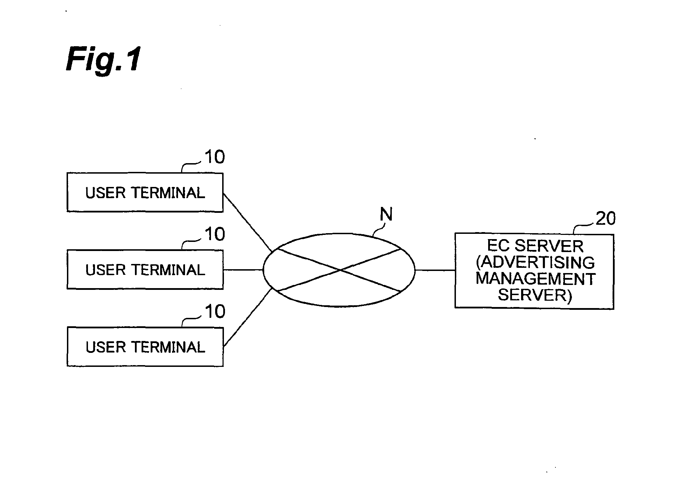

The functional configuration of an advertising management system 1 according to a first embodiment is described firstly with reference to Figs. 1 to 7. The advertising management system 1 is a computer system that counts the number of times an advertising content provided to a user is displayed. The counted number of times displayed serves as basic data for evaluating the advertising content. As shown in Fig. 1, the advertising management system 1 includes user terminals 10 and an EC server 20. The user terminals 10 and the EC server 20 are connected to each other through a communication network N including Internet. Although three user terminals 10 are shown in Fig. 1, the number of user terminals 10 is not particularly limited.

The user terminals 10 are computers with a browser. Examples of the user terminals 10 include advanced mobile phones (smart phones), mobile phones, personal computers (PC), personal digital assistants (PDA) and the like, though the variety of the user terminals is not limited thereto.

The EC server 20 is a computer that provides a web page (web document) of an online shopping site to the user terminals 10 through the communication network N and counts the number of times an advertising content (for example, banner advertisement) embedded in the web page is displayed. The web page and the advertising content therein provided by the EC server 20 are displayed on browsers running on the user terminals 10. The web page provided by the EC server 20 may be a top page of an online shopping site, a page displaying product search results, a page displaying detailed information of a specific product or a shopping cart button or the like. Note that, however, the contents of the web page provided are not particularly limited.

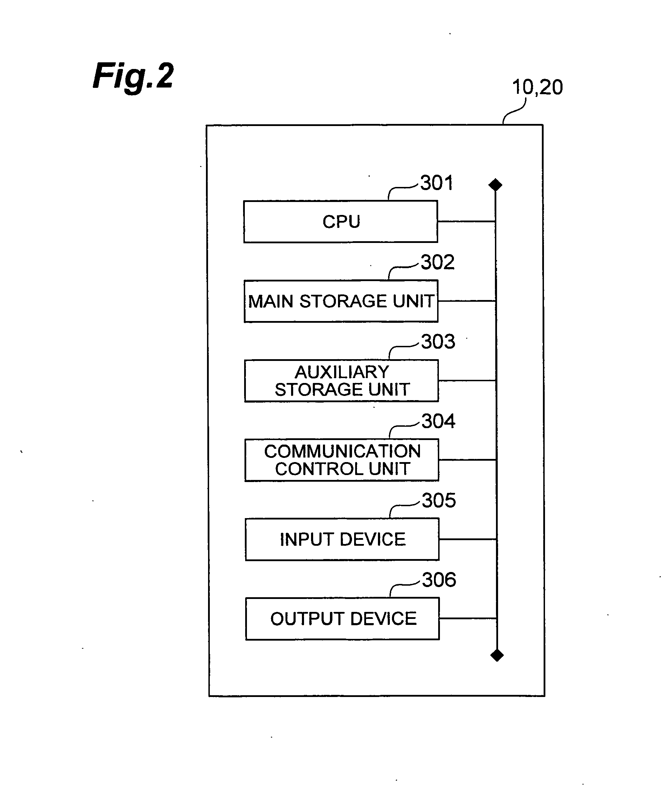

The user terminals 10 and the EC server 20 have the similar hardware configuration, though the scale may be different. Specifically, as shown in Fig. 2, the user terminals 10 and the EC server 20 are composed of a CPU 301 that executes an operating system, an application program and the like, a main storage unit 302 composed of ROM and RAM, an auxiliary storage unit 303 composed of a hard disk and the like, a communication control unit 304 composed of a network card and the like, an input device 305 such as a keyboard, a mouse and a touch panel, and an output device 306 such as a monitor.

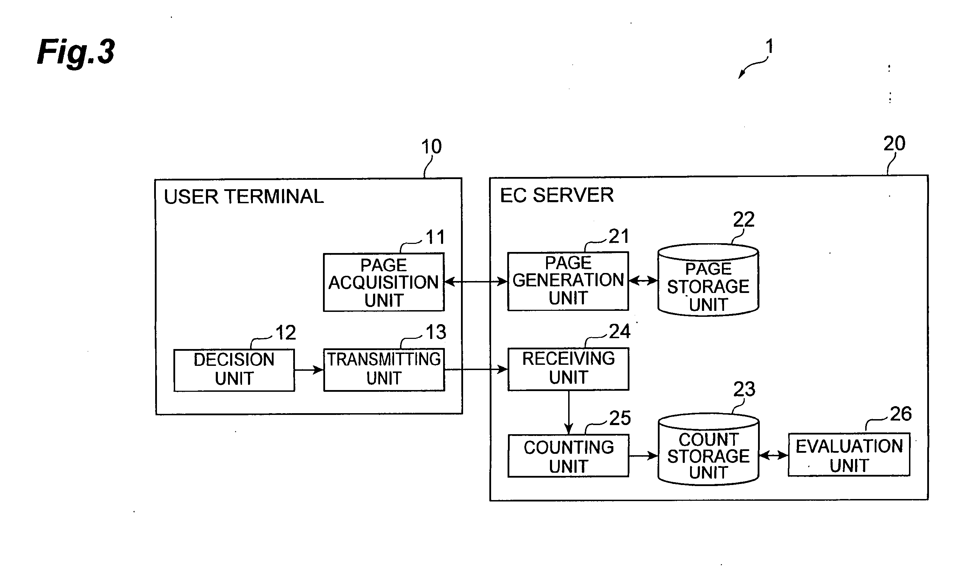

The functional elements shown in Fig. 3 are implemented by loading given software onto the CPU 301 or the main storage unit 302, making the communication control unit 304, the input device 305, the output device 306 and the like operate under control of the CPU 301, and performing reading and writing of data in the main storage unit 302 or the auxiliary storage unit 303. The data and database required for processing are stored in the main storage unit 302 or the auxiliary storage unit 303.

Note that, although the EC server 20 is composed of one machine in Fig. 2, the EC server 20 may be composed of a plurality of machines.

First, the functional configuration of the user terminals 10 is described. As shown in Fig. 3, functions of a page acquisition unit 11, a decision unit (decision means) 12, and a transmitting unit (transmitting means) 13 are executed in the user terminal 10.

The page acquisition unit 11 is a means for making a request for a specific web page to the EC server 20 according to a user operation, receiving the web page transmitted from the EC server 20 in response to the request, and displaying the web page on a web browser. The request transmitted to the EC server 20 contains the URL of the web page.

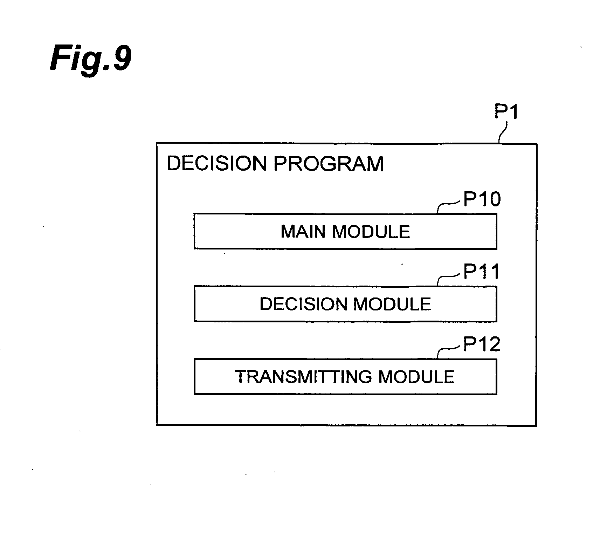

The decision unit 12 is a means for deciding the display pattern of an advertising content. The decision unit 12 is implemented by a program (decision program P1 shown in Fig. 9) in JavaScript (registered trademark) embedded in the web page received by the page acquisition unit 11, which is loaded and executed in the CPU 301 or the main storage unit 302.

The decision unit 12 acquires the window size (width and height) of a browser opened on the user terminal 10, the size (width and height) of a downloaded web page, and the coordinates (x, y) indicating the position of an advertising content in the web page. Further, during the period from the start of display of the web page on the browser to the end of display, the decision unit 12 monitors the downloading status of the web page and each of advertising contents and scrolling by a user in the browser. Then, for each of one or more advertising contents defined as a monitoring target in the decision program P1, the decision unit 12 acquires at least one of the downloaded amount and the displayed region amount of the advertising content based on the monitoring result. The decision unit 12 then decides the display pattern of the advertising content to be monitored based on at least one of the downloaded amount and the displayed region amount acquired.

The display position of an advertising content can be acquired by obtaining the position of the advertising content relative to the window based on the window size of the browser, the size of the web page, the coordinates of the advertising content, and the amount of scrolling. The acquisition of the display position of the advertising content and the amount of scrolling is executed using various methods in JavaScript (registered trademark). For example, the position of the advertising content is executed by methods such as "scrollLeft", "scrollTop", "window.innerWidth", "window.innerHeight", "image.complete", "document.documentElement.scrollWidth", and "document.documentElement.scrollHeight". Specifically, the amount of horizontal scrolling can be obtained based on "scrollLeft", and the amount of vertical scrolling can be obtained based on "scrollTop". Further, the width of the browser window can be obtained based on "window.innerWidth", and the height of the browser window can be obtained based on "window.innerHeight". Further, the width of the web page can be obtained based on "document.documentElement.scrollWidth", and the height of the web page can be obtained based on "document.documentElement.scrollHeight". Note that, however, the above-described methods are just examples, and the method is not limited thereto.

The downloaded amount of an advertising content may be represented by the absolute value of the amount of data of the advertising content received (which is also referred to hereinafter as "amount of data received") or represented by the proportion of the amount of data of the advertising content received to the data size written in the data header of the advertising content (download percentage). Further, information as to whether the download percentage is 1.0 (=100%) may be obtained by determining whether an image has been completely downloaded based on the method "image.complete" in JavaScript (registered trademark).

Although a plurality of display patterns of advertising contents are defined in advance in the decision program P1, the definition is not particularly limited and may be set arbitrarily. Accordingly, there are various methods for deciding a display pattern executed by the decision unit 12. Several examples of the definition and the decision method of a display pattern are described hereinbelow.

[First Example]

The display pattern of an advertising content may be defined in a plurality of scales on the basis of the absolute value of the area of the advertising content displayed within a browser (which is referred to hereinafter as "displayed area"). Alternatively, the display pattern may be defined in a plurality of scales on the basis of the proportion of the area of the advertising content displayed within a browser to the whole area of the advertising content (which is referred to hereinafter as "displayed percentage"). The displayed area and the displayed percentage are examples of the displayed region amount.

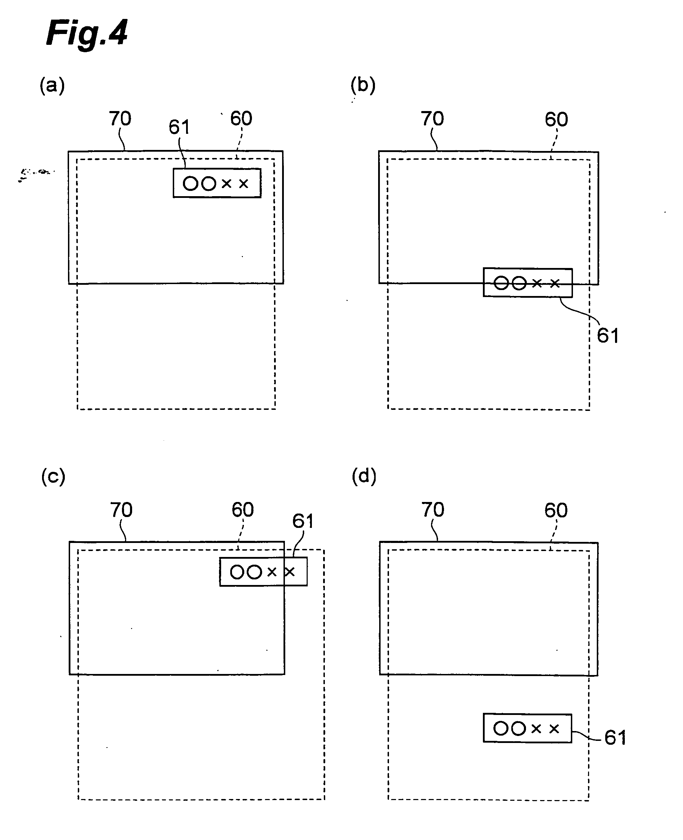

For example, a case where the whole part of an advertising content 61 embedded in a web page 60 appears within a browser 70 (display pattern A1; see Fig. 4(a)), a case where only a part of the advertising content 61 appears within the browser 70 (display pattern A2; see Fig. 4(b) and Fig. 4(c)), and a case where the advertising content 61 does not appear within the browser 70 at all (display pattern A3; see Fig. 4(d)) may be defined. The display pattern A2 may be further subdivided on the basis of the displayed area or the displayed percentage. For example, when using the displayed percentage, a display pattern A2a in which the displayed percentage is more than 0 and equal to or less than 0.5 and a display pattern A2b in which the displayed percentage is more than 0.5 and equal to or less than 1.0 may be defined.

Further, when using the displayed percentage, a case where the displayed percentage is equal to or more than 0.8 may be a display pattern A1, a case where the displayed percentage is equal to or more than 0.2 and less than 0.8 may be a display pattern A2, and a case where the displayed percentage is less than 0.2 may be a display pattern A3. Alternatively, when using the displayed area for an advertising content with 1000x1000 pixels, a case where the displayed area is equal to or more than 600x600 pixels may be a display pattern A1, and a case where the displayed area is less than 600x600 pixels may be a display pattern A2. In this manner, the number of display patterns and the threshold of the displayed region amount for classifying the display patterns may be set arbitrarily.

The threshold for classifying the display patterns may be separately set for each of advertising contents. In the case of using the displayed percentage, the display status of various sizes of advertising contents may be acquired at the same basis by standardizing the threshold.

The decision unit 12 acquires the display position of an advertising content at each event, such as at the initial display of a web page or at the occurrence of scrolling, and obtains the displayed region amount (the displayed area or the displayed percentage) based on the display position. Because the position of an advertising content relative to the region of a browser can change depending on a user operation, the displayed region amount can change by the user operation while the web page is displayed. Thus, the decision unit 12 may monitor a change of the displayed region amount over time and use a statistic of the displayed region amount (the displayed area or the displayed percentage) during the period when the web page is displayed (during the monitoring period) as the final displayed region amount to be used for deciding the display pattern of the advertising content. For example, the decision unit 12 may calculate the average value or the maximum value of the displayed region amount, the most frequent displayed region amount (which is the displayed region amount in which state the advertising content stays for the longest time) or the like from the monitoring result. Note that, however, a method of calculating a statistic is not limited thereto.

When an event that the web page disappears from the browser occurs due to the transition of the page, the close of the browser or the like, the decision unit 12 specifies the display pattern corresponding to the displayed region amount in response to the event. Then, the decision unit 12 outputs decision information indicating the specified result to the transmitting unit 13. For example, when the displayed percentage is 1.0, the decision unit 12 outputs decision information indicating the display pattern A1, and, when the displayed percentage is 0.6, the decision unit outputs decision information indicating the display pattern A2 or the display pattern A2b. The decision information contains an identifier (advertising ID) for identifying the advertising content for which the display pattern has been decided.

[Second Example]

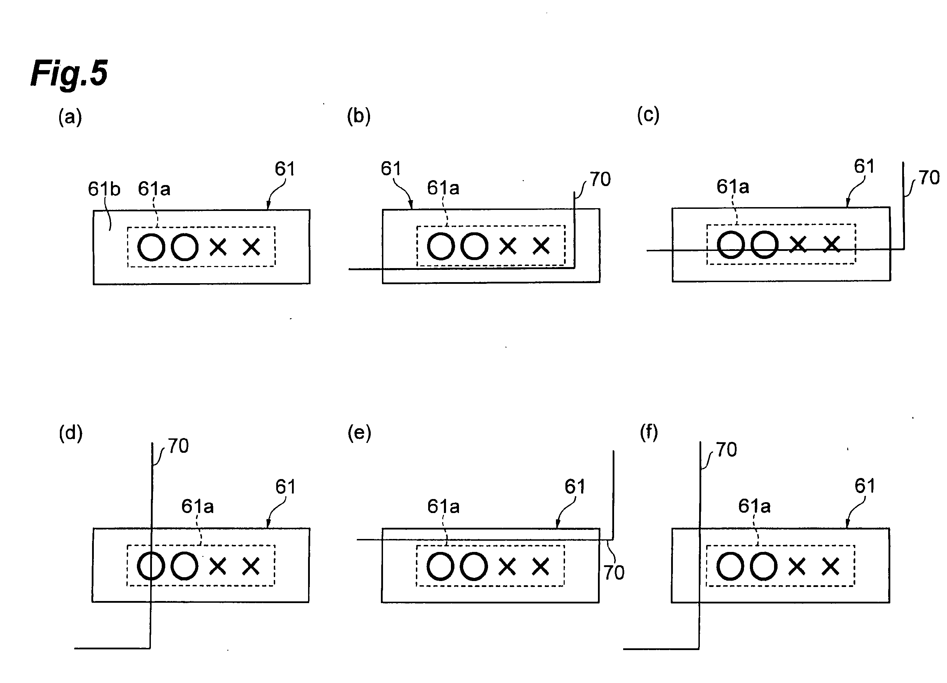

The display pattern of an advertising content may be defined in a plurality of scales on the basis only of the displayed region amount of a partial area (specific region) in the advertising content. Specifically, the display pattern may be defined in a plurality of scales on the basis of the absolute value of the area of the specific region displayed within a browser ("displayed area"). Further, the display pattern may be defined on the basis of the proportion of the area of the specific region displayed within a browser to the whole area of the specific region ("displayed percentage"). As shown in Fig. 5(a), some advertising content 61 can be divided into a specific region 61a (for example, a message part or the like) having an appeal for viewers and a background region 61b (a region other than the specific region 61a in Fig. 5(a)). In the second example, attention is paid only to the displayed region amount of the specific region having an appeal, with no consideration to the background region.

For example, a case where the whole part of the specific region 61a appears within the browser 70 (display pattern B1; see Fig. 5(b)), a case where only a part of the specific region 61a appears within the browser 70 (display pattern B2; see Fig. 5(c) and Fig. 5(d)), and a case where the specific region 61a does not appear within the browser 70 at all (display pattern B3; see Fig. 5(e) and Fig. 5(f)) may be defined. In the display pattern B1, even if a part of the background region 61b is located outside of the browser 70, the displayed percentage is 1.0. In the display pattern B2 also, the displayed region amount is calculated based on the position of the specific region 61a relative to the browser 70, regardless of the position of the background region 61b. In the display pattern B3, the displayed region amount is 0 even when a part of the background region 61b is located within the browser 70. In the second example also, the number of display patterns and the threshold of the displayed region amount for classifying the display patterns may be set arbitrarily.

The decision unit 12 acquires the display position of the specific region of an advertising content at each event, such as at the initial display of a web page or at the occurrence of scrolling, and obtains the displayed region amount based on the display position. The decision unit 12 may use a statistic of the displayed region amount as the final displayed region amount, just like the first example.

When an event that the web page disappears from the browser occurs, the decision unit 12 specifies the display pattern corresponding to the displayed region amount of the specific region in response to the event, just like the first example. Then, the decision unit 12 outputs decision information containing the specified result and the advertising ID to the transmitting unit 13.

As described above, by paying attention to the displayed region amount of the specific region, it is possible to acquire the actual display status of an important part of the advertising content in detail. For example, it is possible to obtain the display status of a message part having a high appeal to users in detail.

[Third Example]

The display pattern of an advertising content may be defined in a plurality of scales on the basis of the downloaded amount (the amount of data received or the download percentage) of the advertising content that can be calculated as above. For example, when using the download percentage, a case where the download percentage is 1.0 (display pattern C1), a case where the download percentage is more than 0 and equal to or less than 1.0 (display pattern C2), and a case where the download percentage is 0 (display pattern C3) may be defined. The third example can be regarded as a method for estimating whether the content is displayed or not more easily by the downloaded amount. For example, it is assumed in the display pattern C1 that the whole part of the advertising content is displayed on the browser, it is assumed in the display pattern C2 that a part of the advertising content is displayed on the browser, and it is assumed in the display pattern C3 that the advertising content is not displayed.

The display pattern C2 may be further subdivided on the basis of the downloaded amount. For example, when using the downloaded amount, the display pattern C2 may be further subdivided using a threshold of 0.5. Further, the boundary between the display patterns C1 and C2 may be set to 0.8, and the boundary between the display patterns C2 and C3 may be set to 0.2. Furthermore, for an advertising content with a data size of 1 MB, only the display pattern C1 in which the amount of data received is 500 KB or more and the display pattern C2 in which the amount of data received is less than 500 KB may be set. In other words, the number of display patterns and the threshold of the downloaded amount for classifying a plurality of display patterns may be set arbitrarily.

When an event that the web page disappears from the browser occurs, the decision unit 12 obtains the downloaded amount of the advertising content at the time of the occurrence of the event, and specifies the display pattern corresponding to the downloaded amount. Then, the decision unit 12 outputs decision information containing the specified result and the advertising ID to the transmitting unit 13.

In the third example, in the case where it is programmed so that an advertising content is displayed within a browser at all times according to scrolling, the decision unit 12 may obtain the downloaded amount of the advertising content at the point of time when the bottom of the web page is displayed.

[Fourth Example]

The display pattern of an advertising content may be defined in a plurality of scales on the basis of both of the displayed region amount and the downloaded amount. In the fourth example, the decision unit 12 may use the displayed area or the displayed percentage of the whole advertising content as in the above first example or may use the displayed area or the displayed percentage of the specific region of the advertising content as in the above second example.

When an event that the web page disappears from the browser occurs, the decision unit 12 calculates the displayed region amount as in the above first or second example and further calculates the downloaded amount as in the above third example. Then, the decision unit 12 obtains an index for deciding the display pattern from the displayed region amount and the downloaded amount. For example, the decision unit 12 may obtain an index x by the following equation (1) using a weight Wa for a displayed region amount Ra and a weight Wb for a downloaded amount Rb.

$$x = Ra \cdot Wa + Rb \cdot Wb \dots (1)$$

It should be noted that the calculation method of the index is not limited to the above equation (1).

The display pattern of an advertising content is predefined in a plurality of scales on the basis of the above index. For example, a case where the index is equal to or more than a threshold Tj (display pattern D1), a case where the index is equal to or more than a threshold Tk and less than the threshold Tj (display pattern D2), and a case where the index is less than the threshold Tk (display pattern D3) may be defined. The number of assumed display patterns and the threshold of the index for classifying a plurality of display patterns may be set arbitrarily.

The decision unit 12 specifies the display pattern corresponding to the obtained index and outputs decision information containing the specified result and the advertising ID to the transmitting unit 13. In this manner, by deciding the display pattern of an advertising content on the basis of both of the displayed region amount and the downloaded amount, it is possible to acquire the actual display status of the advertisement in further detail.

The decision unit 12 executes the above-described process each time a web page containing an advertising content is downloaded and displayed on the browser.

The transmitting unit 13 is a means for transmitting the decision information input from the decision unit 12 to the EC server 20. Like the decision unit 12, the transmitting unit 13 is implemented by the decision program P1 embedded in the web page received by the page acquisition unit 11, which is loaded and executed in the CPU 301 or the main storage unit 302.

The EC server 20 is described next. As shown in Fig. 3, functions of a page generation unit 21, a page storage unit 22, a count storage unit (storage means) 23, a receiving unit (receiving means) 24, a counting unit (counting means) 25, and an evaluation unit (evaluation means) 26 are executed in the EC server 20.

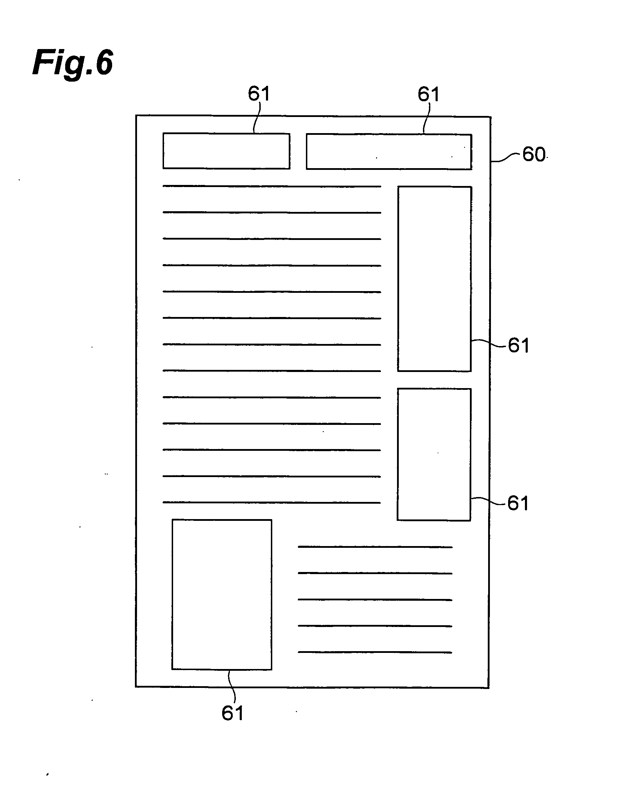

The page generation unit 21 is a means for generating a web page according to a request from the user terminal 10 and transmitting the web page to the user terminal 10. The page generation unit 21 reads data (containing the decision program P1) of a web page corresponding to the URL indicated by the received request, advertising contents to be embedded in the page and the like from the page storage unit 22. Then, the page generation unit 21 generates a web page using the read data and transmits the web page to the user terminal 10. For example, the page generation unit 21 generates the web page 60 as shown in Fig. 6. Although five advertising contents 61 are embedded in the web page 60, the advertising contents of which display patterns are to be monitored may be some of them or all of them.

The count storage unit 23 is a means for storing the number of times displayed (the total number of times displayed) for each of display patterns with respect to each of the advertising contents. Specifically, the count storage unit 23 stores records in which two or more display patterns and the number of times for each display pattern are associated with one advertising ID.

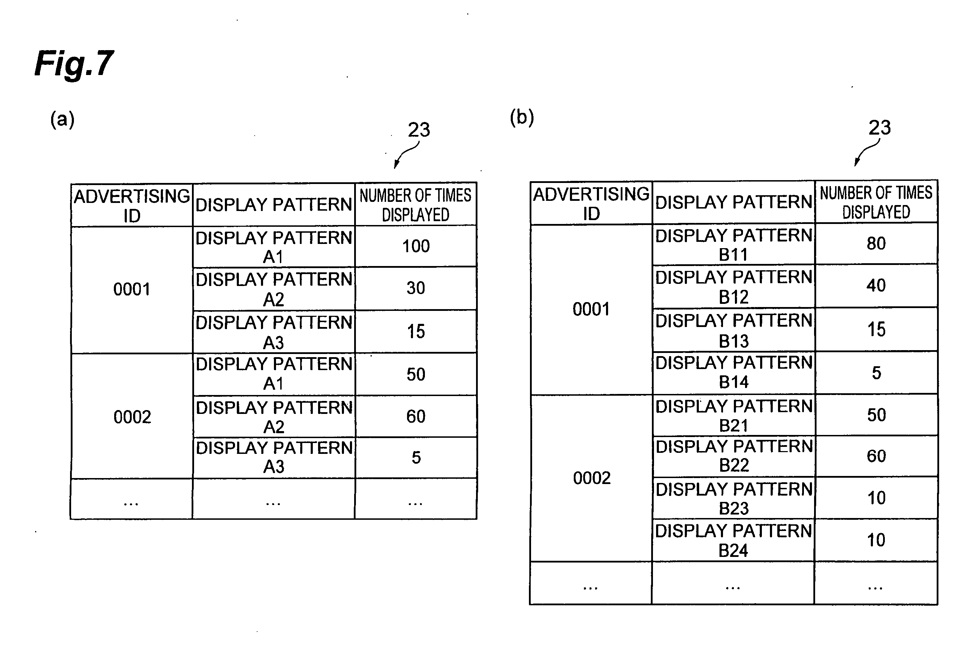

Fig. 7 shows a configuration of the count storage unit 23 and an example of data. Fig. 7(a) shows an example in which the number of times each of the advertising contents is displayed is stored separately into three display patterns A1 to A3 which are common. Fig. 7(b) shows an example in which the number of times each of the advertising contents is displayed is stored separately into a plurality of display patterns (display patterns B11 to B14 and display patterns B21 to B24) which are uniquely set for each of the advertising contents. Because the number and the details of display patterns may be set in various ways as described above, the configuration of the count storage unit 23 is not limited to the example of Fig. 7 and various alternatives may exist.

The receiving unit 24 is a means for receiving the decision information transmitted from the user terminal 10 and outputting the decision information to the counting unit 25.

The counting unit 25 is a means for counting the number of times an advertising content is displayed for each of display patterns by updating the corresponding record in the count storage unit 23 based on the input decision information. Specifically, the counting unit 25 increments the number of times displayed which corresponds to the advertising ID and the display pattern indicated by the decision information by one. For example, assume that the count storage unit 23 is in the state shown in Fig. 7(a), when the decision information indicating the advertising ID "0002" and "display pattern A2" is input, the counting unit 25 updates the number of times displayed "60" which corresponds to the decision information to "61". When the record which corresponds to the decision information does not exist in the count storage unit 23, the counting unit 25 generates a record composed of the advertising ID and the display pattern indicated by the decision information and the value "1" and stores the record into the count storage unit 23.

The evaluation unit 26 is a means for calculating an evaluated value for an advertising content based on the records in the count storage unit 23.

The evaluation unit 26 may perform multiplication of a factor predetermined for each of display patterns and the corresponding number of times displayed and use the sum of the multiplication results as the evaluated value of the advertising content. For example, assume that the count storage unit 23 has the configuration shown in Fig. 7(a) and factors corresponding to the display patterns A1 to A3 are 1.0, 0.8 and 0.3, respectively. In this case, the evaluated value E of the advertising content identified by the advertising ID "0001" in Fig. 7(a) is E=100×1.0+30×0.8+15×0.3=128.5. The evaluation unit 26 may calculate the advertising rate based on the evaluated value E. Further, the evaluation unit 26 may calculate an index for advertising design (for example, an index for the data size or position of an advertising content) based on the evaluated value E.

Alternatively, the evaluation unit 26 may perform multiplication of the unit price of advertising that is set in advance for each of display patterns and the corresponding number of times displayed, and obtain the sum of the multiplication results, thereby calculating the advertising rate of the advertising content as the evaluated value.

It should be noted that the calculation method of the evaluated value is not particularly limited. Further, the application of the number of times displayed and the evaluated value is also not particularly limited.

The evaluation unit 26 may output the calculated evaluated value by an arbitrary method. For example, the evaluation unit 26 may display the evaluated value on a monitor, transmit the evaluated value to another information processing device, or store the evaluated value into any storage means.

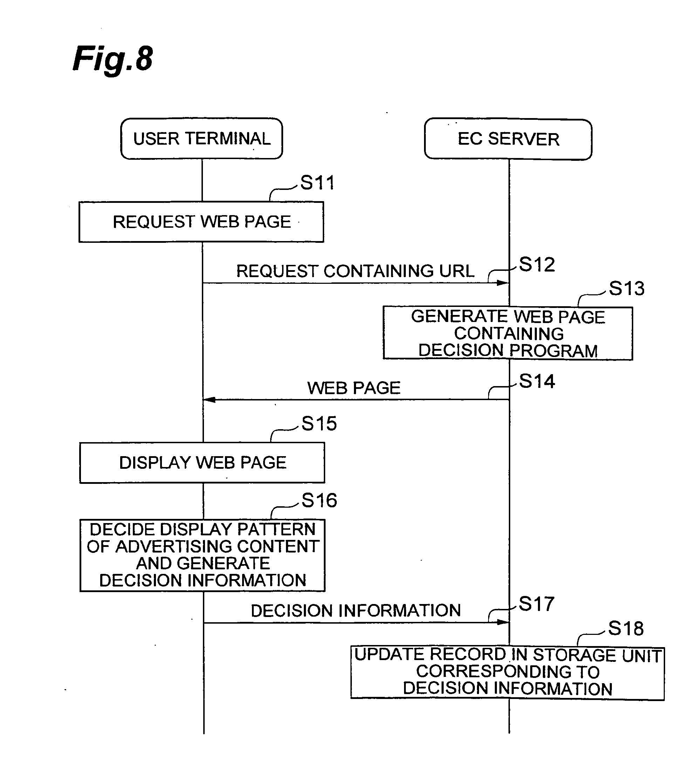

Hereinafter, the operation of the advertising management system 1 is described, and an advertising management method according to the embodiment is described with reference to Fig. 8.

When a user performs an operation to request a web page in the user terminal 10, the page acquisition unit 11 transmits a request containing the URL of the web page to the EC server 20 (Step S11, S12). In response thereto, the page generation unit 21 of the EC server 20 generates a web page containing the decision program P1 and transmits the web page to the user terminal 10 (Step S 13, S 14). Then, the page acquisition unit 11 of the user terminal 10 displays the web page (Step S15).

After that, the decision unit 12 of the user terminal 10 decides the display pattern of the advertising content and generates the decision information (Step S16, decision step). The decision method of the display pattern may contain various alternatives as described in the above first to fourth examples, for instance. In any case, the decision unit 12 decides the display pattern of the advertising content to be monitored based on at least one of the downloaded amount and the displayed region amount. Then, the transmitting unit 13 transmits the decision information to the EC server 20 (Step S 17).

In the EC server 20, the receiving unit 24 receives the transmitted decision information, and the counting unit 25 executes update processing that increments the number of times displayed by one in the record in the count storage unit 23 which corresponds to the decision information (Step S 18, counting step). The number of times displayed stored in the count storage unit 23 is used for processing in the evaluation unit 26.

Programs according to the embodiment are described hereinbelow. As shown in Fig. 9, the decision program P1 includes a main module P10, a decision module P11, and a transmitting module P12. The main module P10 is a part that exercises control over decision processing in the user terminal 10. The decision unit 12 and the transmitting unit 13 are implemented on the user terminal 10 by the decision module P11, and the transmitting module P12 as described above.

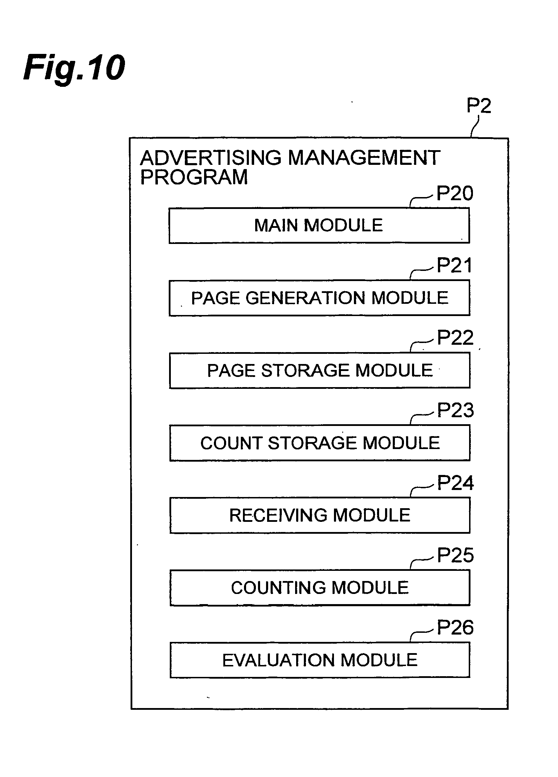

An advertising management program P2 for causing a computer to function as the EC server 20 includes a main module P20, a page generation module P21, a page storage module P22, a count storage module P23, a receiving module P24, a counting module P25, and an evaluation module P26 as shown in Fig. 10.

The main module P20 is a part that exercises control over advertising management processing. The functions implemented by executing the page generation module P21, the page storage module P22, the count storage module P23, the receiving module P24, the counting module P25, and the evaluation module P26 are the same as the functions of the page generation unit 21, the page storage unit 22, the count storage unit 23, the receiving unit 24, the counting unit 25, and the evaluation unit 26, respectively.

The advertising management program P2 is provided in the form of being fixedly recorded on a recording medium such as CD-ROM or DVD-ROM, or semiconductor memory, for example. Further, the advertising management program P2 may be provided as a data signal superimposed on a carrier wave through a communication network.

As described above, according to the embodiment, the display pattern of an advertising content is decided at least one of the downloaded amount (the amount of data received or the download percentage) and the displayed region amount (the displayed area or the displayed percentage). Then, the number of times displayed in the count storage unit 23 which corresponds to the decision result is updated. In this manner, by counting the number of times the advertising content is displayed for each of display patterns, it is possible to acquire the actual display status of the advertisement in the user terminal 10 in further detail.

By recording the number of times each content is displayed with respect to each of display patterns, it is possible to accurately evaluate the advertising content and make improvements. For example, the display position of the advertising content in the web page can be revised, or the design of the advertising content whose display region size is too large can be revised. Further, the design of the advertising content whose data size is too large or which uses a special Flash (registered trademark) program for special effects can be revised. Furthermore, it is possible to accurately obtain the effectiveness (advertising effectiveness) of the advertising content and thereby calculate an appropriate advertising rate.

In this embodiment, the display pattern of an advertising content is decided in the user terminal 10, and it is thereby possible to reduce the processing load imposed on the EC server 20. Further, because it is only necessary to transmit decision information containing an advertising ID and a specified display pattern from the user terminal 10 to the advertising management server 20, it is possible to reduce the load imposed on the communication network N.

(Second embodiment)

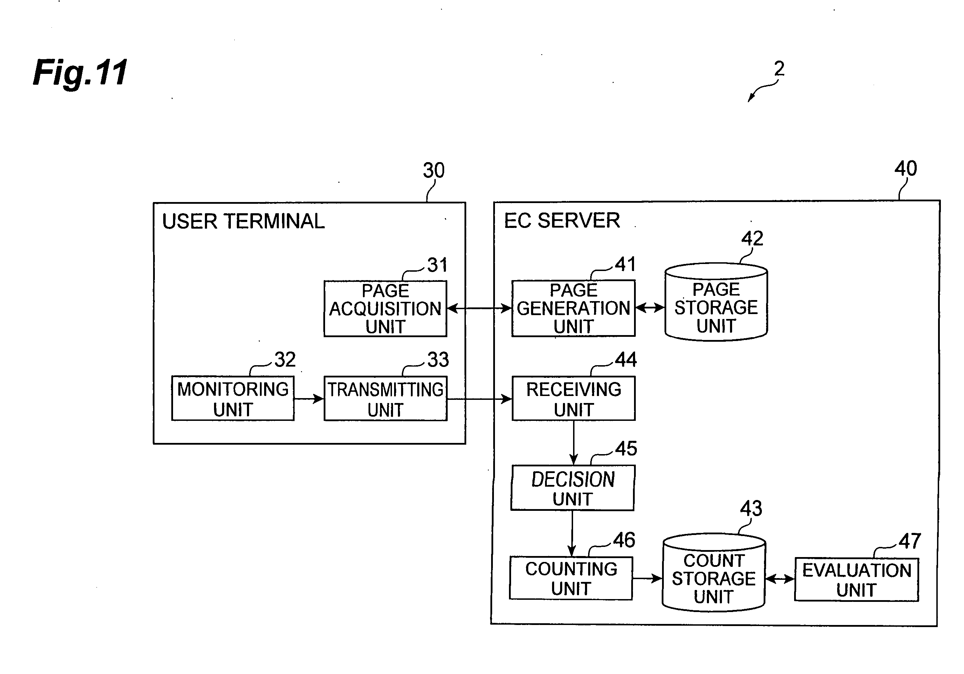

The functional configuration of an advertising management system 2 according to a second embodiment is described next with reference to Fig. 11. The advertising management system 2 includes user terminals 30 and an EC server 40. The overall configuration of the advertising management system 2 is the same as that shown in Fig. 1, and the user terminals 30 and the EC server 40 are connected to each other through a communication network N. The user terminals 30 and the EC server 40 have the hardware configuration as shown in Fig. 2. The advertising management system 2 is different from the advertising management system 1 in that the display pattern of an advertising content in the user terminal 30 is decided on the server side, not on the terminal side. Hereinafter, differences from the first embodiment are particularly described, and redundant description is omitted.

First, the user terminal 30 is described. In the user terminal 30, a page acquisition unit 31, a monitoring unit 32 and a transmitting unit 33 are executed. The function of the page acquisition unit 31 is the same as the page acquisition unit 11 in the first embodiment and description thereof is omitted, and the monitoring unit 32 and the transmitting unit 33 are described below.

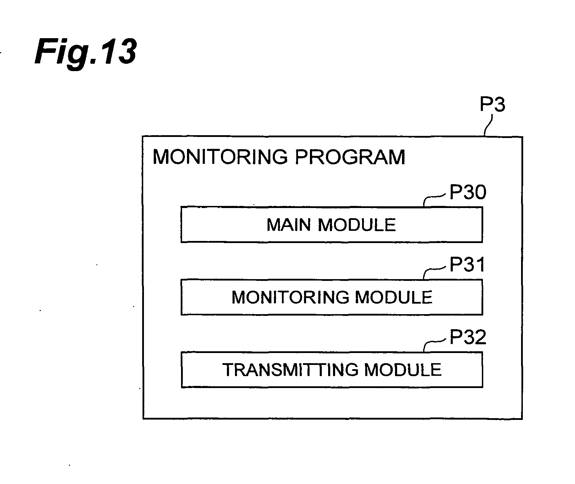

The monitoring unit 32 is a means for monitoring a user operation and a page display processing executed during the period from the start of display of the web page received by the page acquisition unit 31 on the browser to the end of display of the web page. Stated differently, the monitoring unit 32 is a means for recording a log of processing of the web page. The monitoring unit 32 is implemented by a program (monitoring program P3 shown in Fig. 13) in JavaScript (registered trademark) embedded in the web page received by the page acquisition unit 31, which is loaded and executed in the CPU 301 or the main storage unit 302.

The monitoring unit 32 monitors the amount of data of the advertising content received and scrolling by a user in the browser during the period from the start of display of the web page on the browser to the end of display in the same way as the decision unit 12 described earlier. Then, the monitoring unit 32 stores the monitoring record as a log. Further, during the monitoring period, the monitoring unit 32 stores the transition of the position of the advertising content relative to the browser window as a log. Then, at the end of display of the web page, the monitoring unit 32 outputs a monitoring log in which the advertising ID and the recorded log are associated to the transmitting unit 33. The monitoring log is used for deciding the display pattern of the advertising content in the EC server 40. The monitoring unit 32 executes the above-described process each time a web page containing an advertising content is downloaded and displayed on the browser.

The transmitting unit 33 is a means for transmitting the monitoring log input from the monitoring unit 32 to the EC server 40. The transmitting unit 33 is implemented by the monitoring program P3 embedded in the web page received by the page acquisition unit 31, which is loaded and executed in the CPU 301 or the main storage unit 302.

The EC server 40 is described next. The EC server 40 includes a page generation unit 41, a page storage unit 42, a count storage unit (storage means) 43, a receiving unit 44, a decision unit (decision means) 45, a counting unit (counting means) 46, and an evaluation unit (evaluation means) 47. The functional configurations of the page storage unit 42, the count storage unit 43, the receiving unit 44, the counting unit 46 and the evaluation unit 47 are the same as those of the page storage unit 22, the count storage unit 23, the receiving unit 24, the counting unit 25 and the evaluation unit 26 in the first embodiment, and description thereof is omitted. The page generation unit 41 and the decision unit 45 are particularly described below.

The page generation unit 41 is a means for generating a web page according to a request from the user terminal 30 and transmitting the web page to the user terminal 30. The function of the page generation unit 41 is basically the same as that of the page generation unit 21 in the first embodiment. However, the page generation unit 41 is different from the page generation unit 21 in that it generates a web page containing not the decision program P1 but the monitoring program P3.

The decision unit 45 is a means for deciding the display pattern of an advertising content in the user terminal 30 on the basis of the monitoring log input from the receiving unit 44. To make the decision, the decision unit 45 stores in advance the definitions of a plurality of display patterns of the advertising content.

The decision unit 45 calculates the position of display of the advertising content relative to the browser window from the contents of the monitoring log and obtains the displayed region amount (the displayed area or the displayed percentage) of the advertising content from the calculation result. Further, the decision unit 45 calculates the downloaded amount of the advertising content from the contents of the monitoring log. Then, the decision unit 45 specifies the display pattern corresponding to the calculated displayed region amount and/or downloaded amount in the same way as any of the first to fourth examples in the first embodiment, for example. The decision unit 45 then generates decision information in which the specified display pattern and the advertising ID in the monitoring log are associated and outputs the decision information to the counting unit 46. The structure of the decision information is the same as that in the first embodiment, and therefore the functional configurations of the counting unit 46 and the count storage unit 43 are respectively the same as the counting unit 25 and the count storage unit 23 in the first embodiment.

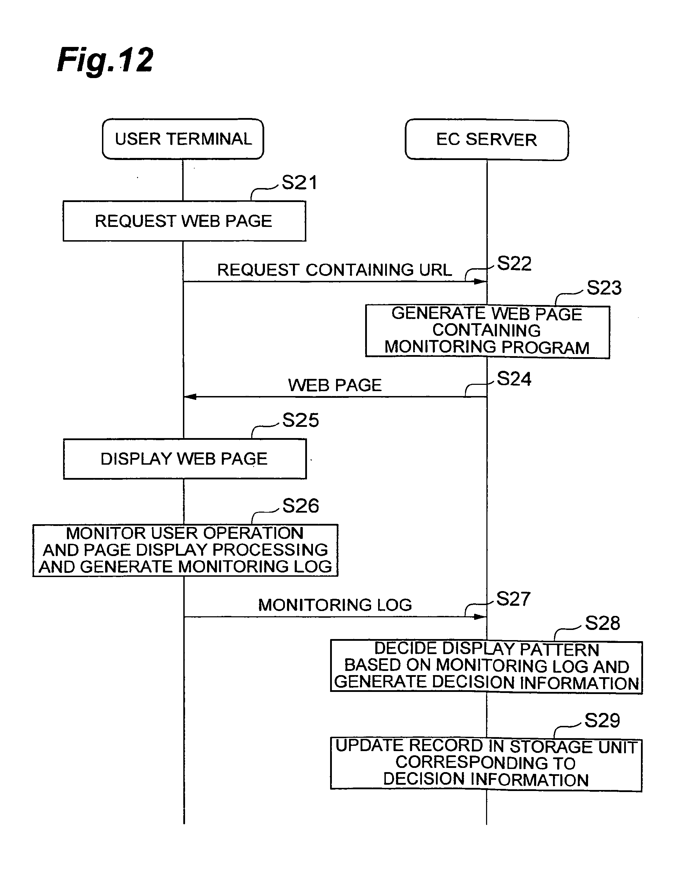

Hereinafter, the operation of the advertising management system 2 is described, and an advertising management method according to the embodiment is described with reference to Fig. 12.

Processing of Steps S21 to S25 is the same as the processing of Steps S11 to S 15 in the first embodiment. A difference from the first embodiment is that the page generation unit 41 generates a web page containing the monitoring program P3, not the decision program P1, in Step S23.

After that, in the user terminal 30, the monitoring unit 32 monitors a user operation and a page display and generates a monitoring log (Step S26). Then, the transmitting unit 33 transmits the monitoring log to the EC server 40 (Step S27).

In the EC server 40, the receiving unit 44 receives the transmitted monitoring log. Then, the decision unit 45 decides the display pattern of the advertising content in the user terminal 30 on the basis of the monitoring log and generates decision information (Step S28, decision step). Various alternatives are possible for the decision method of the display pattern, as in the above first to fourth examples in the first embodiment, for instance. In any case, the decision unit 45 decides the display pattern of the advertising content to be monitored on the basis of at least one of the downloaded amount and the displayed region amount. Then, the counting unit 46 executes update processing that increments the number of times displayed by one in the record in the count storage unit 43 which corresponds to the decision information (Step S29, counting step). The number of times displayed stored in the count storage unit 43 is used for processing in the evaluation unit 47.

Programs according to the embodiment are described hereinbelow. As shown in Fig. 13, the monitoring program P3 includes a main module P30, a monitoring module P31, and a transmitting module P32. The main module P30 is a part that exercises control over monitoring processing in the user terminal 30. The monitoring unit 32 and the transmitting unit 33 are implemented on the user terminal 30 by the monitoring module P31 and the transmitting module P32 as described above.

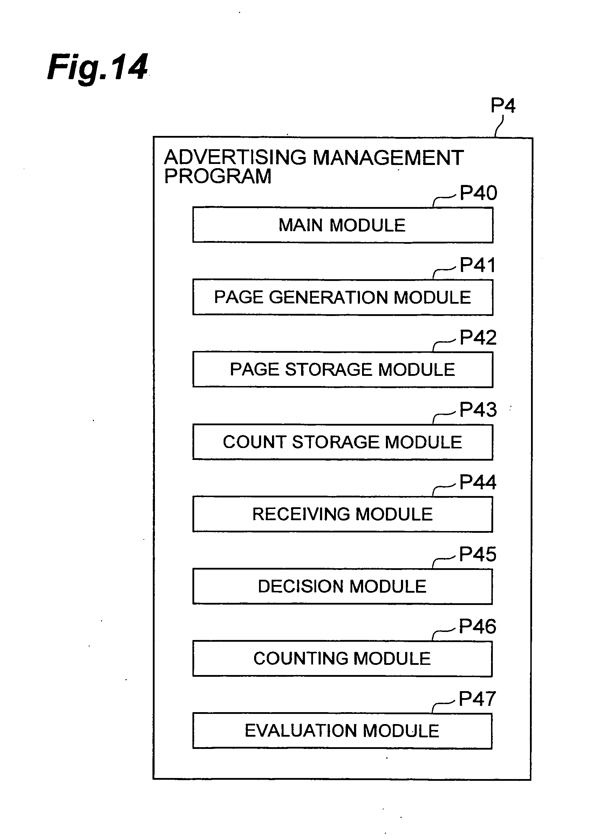

An advertising management program P4 for causing a computer to function as the EC server 40 includes a main module P40, a page generation module P41, a page storage module P42, a count storage module P43, a receiving module P44, a decision module P45, a counting module P46, and an evaluation module P47 as shown in Fig. 14. The advertising management program P4 may be provided in the same way as the advertising management program P2.

The main module P40 is a part that exercises control over advertising management processing. The functions implemented by executing the page generation module P41, the page storage module P42, the count storage module P43, the receiving module P44, the decision module P45, the counting module P46, and the evaluation module P47 are the same as the functions of the page generation unit 41, the page storage unit 42, the count storage unit 43, the receiving unit 44, the decision unit 45, the counting unit 46, and the evaluation unit 47, respectively.

In the second embodiment also, by counting the number of times the advertising content is displayed for each of display patterns, it is possible to acquire the actual display status of the advertisement in the user terminal 30 in further detail. Then, by recording the number of times each content is displayed for each of display patterns, it is possible to accurately evaluate the advertising content and make improvements as in the first embodiment.

Because there is no need to perform determination on the user terminal 30 side in this embodiment, it is possible to reduce the processing load on the user terminal 30.

Embodiments of the present invention are described in detail above. However, the present invention is not limited to the above-described embodiments. Various changes and modifications may be made to the present invention without departing from the scope of the invention.

Although the decision program P1 and the monitoring program P3 are provided from the EC server 20, 40 to the user terminal 10, 30 by being contained in a web page in each of the above-described embodiments, the decision program and the monitoring program may be pre-installed in the user terminal. In this case, those programs may be created by Java (registered trademark), C++ or the like.

Although the EC server 20, 40 serves as the advertising management server in each of the above-described embodiments, the advertising management server and the EC server may be separated. For example, a web server that exists separately from the EC server may function as the advertising management server. Further, the advertising management server may exist in a computer system other than an electronic commerce system. For example, the advertising server may exist in a system that provides a search service, a portal service or the like.

Although the EC server 20, 40 stores the number of times the advertising content is displayed in each of the above-described embodiments, the storage means corresponding to the count storage unit 23, 43 may be placed in a server different from the advertising management server. In this case, the advertising management server may access the storage means through a given communication network. Further, the evaluation means corresponding to the evaluation unit 26, 47 may be also placed in a server different from the advertising management server. Furthermore, the means corresponding to the page generation unit 21, 41 and the page storage unit 22, 42 may be also placed in a server different from the advertising management server.

Although a decision as to whether an advertising content is displayed on the browser is made in each of the above-described embodiments, the range of the screen as a basis for the decision is not limited thereto. For example, a decision may be made as to whether an advertising content is displayed within the window of software different from the browser, or a decision may be made as to whether it is displayed within the desktop screen. Further, the way of delivery of an advertising content is also not particularly limited, and an advertising content may be sent to the terminal as independent data without being contained in a web page or in the form contained in a file of another format, for example.

**Reference Signs List**

1,2...Advertising management system, 10...User terminal, 11...Page acquisition unit, 12...Decision unit, 13... Transmitting unit, 20...EC server (advertising management server), 21...Page generation unit, 22...Page storage unit, 23 ... Count storage unit, 24...Receiving unit, 25...Counting unit, 26...Evaluation unit, 30...User terminal, 31...Page acquisition unit, 32...Monitoring unit, 33...Transmitting unit, 40...EC server (advertising management server), 41...Page generation unit, 42...Page storage unit, 43...Count storage unit, 44...Receiving unit, 45...Decision unit, 46 ... Counting unit, 47...Evaluation unit, P1...Decision program, P10...Main module, P11...Decision module, P 12... Transmitting module, P2...Advertising management program, P20...Main module, P21...Page generation module, P22...Page storage module, P23...Count storage module, P24...Receiving module, P25... Counting module, P26...Evaluation module, P3...Monitoring program, P30...Main module, P31...Monitoring module, P32... Transmitting module, P4...Advertising management program, P40...Main module, P41...Page generation module, P42...Page storage module, P43...Count storage module, P44...Receiving module, P45...Decision module, P46...Counting module, P47...Evaluation module

**Claims**

1. An advertising management system including a terminal and an advertising management server connected to the terminal through a communication network, comprising:

   a decision means for deciding a display pattern of an advertising content transmitted to the terminal among a plurality of predetermined display patterns based on at least one of a downloaded amount of the advertising content and a displayed region amount of the advertising content on a screen of the terminal; and
   a counting means for executing update processing that counts number of times displayed corresponding to the display pattern of the advertising content decided by the decision means on a storage means storing number of times each advertising content is displayed with respect to each of the plurality of predetermined display patterns.

2. The advertising management system according to Claim 1, wherein
   the displayed region amount is a displayed region amount of a specific region being a part of the advertising content.

3. The advertising management system according to Claim 1 or 2, wherein
   the screen is a predetermined window,
   the advertising content is embedded in a web page displayed in the window, and
   the decision means monitors a change of the displayed region amount during a time when the web page is displayed in the window and decides the display pattern of the advertising content using a statistic of the displayed region amount obtained from a monitoring result during the time.

4. The advertising management system according to any one of Claims 1 to 3, wherein
   the decision means decides the display pattern of the advertising content based on an index calculated from the displayed region amount and the downloaded amount.

5. The advertising management system according to any one of Claims 1 to 4, wherein
   the screen is a predetermined window,
   the advertising content is embedded in a web page displayed in the window and is displayed in the window at all times even when scrolling on the window occurs, and
   the decision means acquires the downloaded amount of the advertising content at a point of time when the web page is scrolled to a bottom.

6. The advertising management system according to any one of Claims 1 to 5, wherein
   the terminal includes the decision means.

7. The advertising management system according to any one of Claims 1 to 5, wherein
   the advertising management server includes the decision means.

8. The advertising management system according to any one of Claims 1 to 7, further comprising:

an evaluation means for calculating an evaluated value of the advertising content based on the number of times the advertising content is displayed with respect to each of the plurality of predetermined display patterns stored in the storage means.

9. An advertising management server connected to a terminal through a communication network, comprising:

a receiving means for receiving decision information indicating a display pattern of an advertising content in the terminal from the terminal, the display pattern of the advertising content decided in the terminal among a plurality of predetermined display patterns based on at least one of a downloaded amount of the advertising content and a displayed region amount of the advertising content on a screen of the terminal; and a counting means for executing update processing that counts number of times displayed corresponding to the display pattern of the advertising content indicated by the decision information received by the receiving means on a storage means storing number of times each advertising content is displayed with respect to each of the plurality of predetermined display patterns.

10. An advertising management method executed by an advertising management system including a terminal and an advertising management server connected to the terminal through a communication network, comprising:

a decision step of deciding a display pattern of an advertising content transmitted to the terminal among a plurality of predetermined display patterns based on at least one of a downloaded amount of the advertising content and a displayed region amount of the advertising content on a screen of the terminal; and a counting step of executing update processing that counts number of times displayed corresponding to the display pattern of the advertising content decided in the decision step on a storage means storing number of times each advertising content is displayed with respect to each of the plurality of predetermined display patterns.

11. An advertising management program causing a computer to function as an advertising management server connected to a terminal through a communication network, the program causing the computer to execute:

a receiving means for receiving decision information indicating a display pattern of an advertising content in the terminal from the terminal, the display pattern of the advertising content decided in the terminal among a plurality of predetermined display patterns based on at least one of a downloaded amount of the advertising content and a displayed region amount of the advertising content on a screen of the terminal; and a counting means for executing update processing that counts number of times displayed corresponding to the display pattern of the advertising content indicated by the decision information received by the receiving means on a storage means storing number of times each advertising content is displayed with respect to each of the plurality of predetermined display patterns.

12. A decision program causing a computer to function as a terminal connected to an advertising management server through a communication network, the program causing the computer to execute:

a decision means for deciding a display pattern of an advertising content transmitted to the computer among a plurality of predetermined display patterns based on at least one of a downloaded amount of the advertising content and a displayed region amount of the advertising content on a screen of the computer; and a transmitting means for transmitting decision information indicating the display pattern of the advertising content decided by the decision means to the advertising management server, the advertising management server executing update processing that counts number of times displayed corresponding to the display pattern of the advertising content indicated by the decision information on a storage means storing number of times each advertising content is displayed with respect to each of the plurality of predetermined display patterns.

13. A computer-readable recording medium in which an advertising management program causing a computer to function as an advertising management server connected to a terminal through a communication network is recorded, the advertising management program causing the computer to execute:

a receiving means for receiving decision information indicating a display pattern of an advertising content in the terminal from the terminal, the display pattern of the advertising content decided in the terminal among a plurality of predetermined display patterns based on at least one of a downloaded amount of the advertising content and a displayed region amount of the advertising content on a screen of the terminal; and a counting means for executing update processing that counts number of times displayed corresponding to the display pattern of the advertising content indicated by the decision information received by the receiving means on a storage means storing number of times each advertising content is displayed with respect to each of the plurality of predetermined display patterns.

14. A computer-readable recording medium in which a decision program causing a computer to function as a terminal connected to an advertising management server through a communication network is recorded, the decision program causing the computer to execute:

a decision means for deciding a display pattern of an advertising content transmitted to the computer among a plurality of predetermined display patterns based on at least one of a downloaded amount of the advertising content and a displayed region amount of the advertising content on a screen of the computer; and
a transmitting means for transmitting decision information indicating the display pattern of the advertising content decided by the decision means to the advertising management server, the advertising management server executing update processing that counts number of times displayed corresponding to the display pattern of the advertising content indicated by the decision information on a storage means storing number of times each advertising content is displayed with respect to each of the plurality of predetermined display patterns.

# *Fig.1*

USER TERMINAL /10

USER TERMINAL /10

USER TERMINAL /10

N

EC SERVER
(ADVERTISING
MANAGEMENT
SERVER) /20

## Fig.2

10,20

- CPU ~301
- MAIN STORAGE UNIT ~302
- AUXILIARY STORAGE UNIT ~303
- COMMUNICATION CONTROL UNIT ~304
- INPUT DEVICE ~305
- OUTPUT DEVICE ~306

# Fig.3

EP 2 579 200 A1

# *Fig.4*

(a)

OO × ×

(b)

OO × ×

(c)

OO × ×

(d)

OO × ×

# Fig.5

(a)

(b)

(c)

(d)

(e)

(f)

EP 2 579 200 A1

# Fig.6

# Fig.7

(a)

| ADVERTISING ID | DISPLAY PATTERN | NUMBER OF TIMES DISPLAYED |
|---|---|---|
| 0001 | DISPLAY PATTERN A1 | 100 |
| | DISPLAY PATTERN A2 | 30 |
| | DISPLAY PATTERN A3 | 15 |
| 0002 | DISPLAY PATTERN A1 | 50 |
| | DISPLAY PATTERN A2 | 60 |
| | DISPLAY PATTERN A3 | 5 |
| ⋮ | ⋮ | ⋮ |

23

(b)

| ADVERTISING ID | DISPLAY PATTERN | NUMBER OF TIMES DISPLAYED |
|---|---|---|
| 0001 | DISPLAY PATTERN B11 | 80 |
| | DISPLAY PATTERN B12 | 40 |
| | DISPLAY PATTERN B13 | 15 |
| | DISPLAY PATTERN B14 | 5 |
| 0002 | DISPLAY PATTERN B21 | 50 |
| | DISPLAY PATTERN B22 | 60 |
| | DISPLAY PATTERN B23 | 10 |
| | DISPLAY PATTERN B24 | 10 |
| ⋮ | ⋮ | ⋮ |

23

# Fig.8

# Fig.9

P1

DECISION PROGRAM

P10
MAIN MODULE

P11
DECISION MODULE

P12
TRANSMITTING MODULE

# Fig.10

P2

ADVERTISING MANAGEMENT
PROGRAM

P20

MAIN MODULE

P21

PAGE GENERATION MODULE

P22

PAGE STORAGE MODULE

P23

COUNT STORAGE MODULE

P24

RECEIVING MODULE

P25

COUNTING MODULE

P26

EVALUATION MODULE

**Fig.11**

2

**USER TERMINAL** 30

**EC SERVER** 40

PAGE ACQUISITION UNIT 31

MONITORING UNIT 32

TRANSMITTING UNIT 33

PAGE GENERATION UNIT 41

PAGE STORAGE UNIT 42

RECEIVING UNIT 44

DECISION UNIT 45

COUNTING UNIT 46

COUNT STORAGE UNIT 43

EVALUATION UNIT 47

# Fig.12

```
┌─────────────────┐                    ┌─────────────────┐
│  USER TERMINAL  │                    │    EC SERVER    │
└─────────────────┘                    └─────────────────┘
         │                                      │
      ⟋ S21                                      │
 ┌──────────────────────┐                       │
 │   REQUEST WEB PAGE   │                        │
 └──────────────────────┘                        │
         │                                       │
         │   REQUEST CONTAINING URL    ⟋ S22     │
         │ ─────────────────────────────────────►│
         │                                ⟋ S23  │
         │                     ┌──────────────────────────┐
         │                     │   GENERATE WEB PAGE      │
         │                     │      CONTAINING          │
         │                     │  MONITORING PROGRAM      │
         │                     └──────────────────────────┘
         │          WEB PAGE              ⟋ S24  │
         │ ◄─────────────────────────────────────│
      ⟋ S25                                       │
 ┌──────────────────────┐                        │
 │   DISPLAY WEB PAGE   │                         │
 └──────────────────────┘                         │
         │                                        │
      ⟋ S26                                        │
 ┌─────────────────────────────┐                  │
 │ MONITOR USER OPERATION      │                  │
 │ AND PAGE DISPLAY PROCESSING │                  │
 │ AND GENERATE MONITORING LOG │                  │
 └─────────────────────────────┘                  │
         │        MONITORING LOG         ⟋ S27    │
         │ ─────────────────────────────────────► │
         │                                ⟋ S28   │
         │              ┌──────────────────────────────────┐
         │              │  DECIDE DISPLAY PATTERN          │
         │              │  BASED ON MONITORING LOG AND     │
         │              │  GENERATE DECISION INFORMATION   │
         │              └──────────────────────────────────┘
         │                                ⟋ S29   │
         │              ┌──────────────────────────────────┐
         │              │ UPDATE RECORD IN STORAGE UNIT    │
         │              │    CORRESPONDING TO              │
         │              │    DECISION INFORMATION          │
         │              └──────────────────────────────────┘
         │                                        │
```

# Fig.13

P3

**MONITORING PROGRAM**

P30

MAIN MODULE

P31

MONITORING MODULE

P32

TRANSMITTING MODULE

# Fig.14

P4

ADVERTISING MANAGEMENT
PROGRAM

P40

| MAIN MODULE |
|---|

P41

| PAGE GENERATION MODULE |
|---|

P42

| PAGE STORAGE MODULE |
|---|

P43

| COUNT STORAGE MODULE |
|---|

P44

| RECEIVING MODULE |
|---|

P45

| DECISION MODULE |
|---|

P46

| COUNTING MODULE |
|---|

P47

| EVALUATION MODULE |
|---|

## INTERNATIONAL SEARCH REPORT

| International application No. |
| --- |
| PCT/JP2011/061448 |

A. CLASSIFICATION OF SUBJECT MATTER
*G06Q30/00*(2006.01)i

According to International Patent Classification (IPC) or to both national classification and IPC

B. FIELDS SEARCHED

Minimum documentation searched (classification system followed by classification symbols)
G06Q30/00

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho  1971-2011    Toroku Jitsuyo Shinan Koho    1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2002-083207 A  (Alps Electric Co., Ltd.), 22 March 2002 (22.03.2002), paragraphs [0011] to [0027], [0049] to [0052]; fig. 1, 5 (Family: none) | 1-14 |
| Y | JP 2002-259824 A  (Konami Co., Ltd.), 13 September 2002 (13.09.2002), paragraphs [0023] to [0024], [0032] to [0040]; fig. 1, 3, 4 (Family: none) | 1-14 |
| A | JP 2003-087440 A  (Nisshoko Inc.), 20 March 2003 (20.03.2003), entire text; all drawings (Family: none) | 1-14 |

☒  Further documents are listed in the continuation of Box C.          ☐  See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 07 June, 2011 (07.06.11) | 21 June, 2011 (21.06.11) |

| Name and mailing address of the ISA/<br>    Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2011/061448

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-279286 A  (Seiko Epson Corp.),<br>27 September 2002 (27.09.2002),<br>entire text; all drawings<br>(Family: none) | 1-14 |
| A | JP 2001-344511 A  (Hitachi, Ltd.),<br>14 December 2001 (14.12.2001),<br>entire text; all drawings<br>(Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002149546 A